# EUROPEAN PATENT SPECIFICATION

(11) **EP 0 588 623 B1**
(45) Date of publication and mention of the grant of the patent: **12.03.1997**
(21) Application number: 93307283.7
(22) Date of filing: 15.09.1993
(51) Int. Cl.: B60C 11/11, B60C 11/12

(54) **Radial tyre**
Radialer Reifen
Bandage pneumatique radial

(30) Priority: 16.09.1992 JP 273773/92; 02.07.1993 JP 190791/93
(43) Date of publication of application: 23.03.1994
(73) Proprietor: Sumitomo Rubber Industries Ltd., Kobe-shi, Hyogo-ken (JP)
(72) Inventor: Aoki, Chieko, Nishi-ku, Kobe-shi, Hyogo-ken (JP); Asano, Kazuo, Kobe-shi, Hyogo-ken (JP)
(74) Representative: Stewart, Charles Geoffrey

(56) References cited:
- EP-A- 0 197 735
- EP-A- 0 321 384
- FR-A- 2 235 811
- PATENT ABSTRACTS OF JAPAN vol. 11, no. 392 (M-653)22 December 1987 & JP-A-62 157 810 (YOKOHAMA TIRE&RUBBER CO LTD.) 13 July 1987
- PATENT ABSTRACTS OF JAPAN vol. 11, no. 344 (M-640)11 November 1987 & JP-A-62 122 804 (YOKOHAMA TIRE&RUBBER CO LTD.) 4 June 1987
- PATENT ABSTRACTS OF JAPAN vol. 13, no. 512 (M-893)(3860) 16 November 1989 & JP-A-01 204 807 (OHTSU TIRE&RUBBER CO. LTD.) 17 August 1989

## Description

The present invention relates to a radial tyre improved in total performance by improving the tread pattern.

Recent high performance cars, in particular sport type cars, require a tyre improved in total performance for safe running.

In general, the total performance of a tyre can be improved by increasing the side force which the tyre can generate on cornering. In order to increase such a side force, it is known for example, to decrease the tread rubber thickness, to increase the tread rubber hardness, to reinforce the tyre tread portion by using breaker belt, to increase the tyre lateral stiffness by providing a reinforcing cord layer, and to decrease the tyre aspect ratio.

However, the recent severe requirements can not be satisfied by the above-mentioned measures.

Further, it was found that when the tyre lateral stiffness is increased, linearity of the side force is liable to be disturbed, and the straight running performance is deteriorated.

It is therefore, an object of the present invention to provide a radial tyre, in which the above total performance is improved.

According to one aspect of the present invention, a radial tyre comprises a radial tyre comprising a tread portion, a pair of bead portions each with a bead core therein, a pair of sidewall portions extending therebetween, a radial carcass extended between the bead portions and turned up around the bead cores, and a belt disposed radially outside the carcass, said tread portion provided with a block pattern consisting of blocks defined by at least one circumferential groove and a plurality of axial grooves, characterised in that the tread portion is provided with only two circumferential grooves each disposed one on each side of the tyre equator, said two circumferential grooves being located in a tread central region, said tread central region being centred on the tyre equator and having an axial width of 1/4 times the maximum axial width of the ground contacting part, said block pattern having a land ratio of not less than 0.67, said land ratio being defined as the total of the top surface areas of all said blocks divided by the total area of the tread face, said blocks including blocks which exist wholly or partially in the ground contacting part of the tread, with respect to said blocks, the total ΣI_{X} of second moment of areas I_{X} of all said blocks being larger than the total ΣI_{Y} of the second moment of areas I_{Y} of all said blocks, wherein each said second moment of area I_{X} is that of the shape of the top surface of each block about a circumferential line passing through the centre point on the top, ground contacting surface, and each said second moment of area I_{Y} is that of the shape the top, ground contacting surface about an axial line passing through the centre point, with respect to said blocks, the total square width ΣJy² is in the range of from 2.5 to 50 times the total square length ΣJx², where said total square width ΣJy² is of the sum of the squares Jy² of all said blocks, Jy being the maximum axial width of the top surface of each block, and said total square length ΣJx² is of the sum of the squares Jx² of all said blocks, Jx being the maximum circumferential length Jx of the top surface of each block, each of said blocks in the ground contacting part being provided with a sipe, and the sipes in said blocks in the tread central region have a circumferential component and an axial component, and the total ΣLx of the lengths Lx of the circumferential components of all said sipes is smaller than the total ΣLy of the lengths Ly of the axial components thereof, the depth of the circumferential grooves is larger than the depth of the axial grooves, the maximum axial width of the ground contacting part is not less than 1.4 times the maximum circumferential length thereof, the width of said circumferential grooves being not less than 10 mm, and the depth thereof not less than 8 mm, and the groove centres of two circumferential grooves are spaced apart from each other by a distance of from 0.10 to 0.20 times the maximum axial width of the ground contacting part when measured axially.

As a result, the pattern stiffness of the block pattern in the tyre axial direction is larger than the pattern stiffness in the tyre circumferential direction, thus it becomes possible to generate increased side force to improve the total tyre performance.

Embodiments of the present invention will now be described in detail in conjunction with the accompanying drawings, in which:
Fig.1 is a cross sectional view of an embodiment of the present invention;
Fig.2 is a cross sectional view of the bead portion;
Fig.3 is a partial plan view of the tyre showing the block pattern;
Figs.4 and 5 are diagrams explaining the rigidity of a block;
Fig.6 is a diagram explaining a second moment of area of a block;
Fig.7 is a diagram explaining the Σ(sigma)Jy² /Σ(sigma)Jx² ratio of a block;
Fig.8 is a diagram explaining the lengths of axial and circumferential components of a sipe;

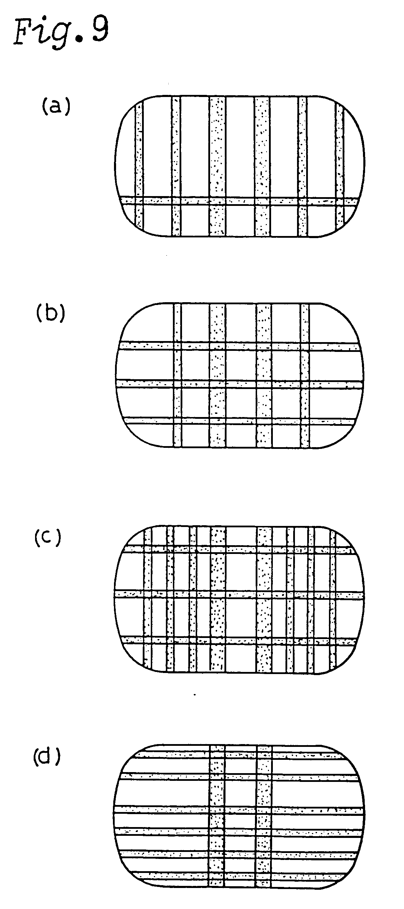

Figs.9(a)-(d) are diagrams showing block patterns used in test tyres;
Fig.10 is a graph indicating the axial pattern stiffness and circumferential pattern stiffness of the test tyre; and
Figs.11(a)-(e) are charts showing test results.

In the figures, a radial tyre 1 is a low aspect belted radial tyre for a passenger car. The tyre 1 has a tread portion 5, a pair of bead portions 3 each with a bead core 2 therein, and a pair of sidewall portions 4 extending therebetween.

The tyre 1 comprises a carcass 6 extended between the bead portions 3, a breaker belt 7 disposed radially outside the carcass 6 and inside the tread portion 5, and a bandage belt 10 disposed on the radially outer surface of the breaker belt 7 to cover at least the axial edge portions of the breaker belt 7.

The carcass 6 in this embodiment is composed of two plies 6A and 6B of polyester cords arranged radially at an angle of 75 to 90 degrees with respect to the tyre equator C.

Both the plies are turned up around the bead cores 2 from the axially inside to the outside of the tyre.

The turned up portions of the radially inner carcass ply 6A are extended radially outwardly over the turned up portions of the radially outer carcass ply 6B to cover the radially outer edges thereof, and are terminated near the maximum tyre section width point.

As a result, due to such high carcass turnup structure, the rigidity of the bead portion 3 and sidewall lower portion is increased.

The breaker belt 7 is composed of at least two crossed plies 7A and 7B of high modulus cords, in this embodiment steel cords, laid at an angle of from 10 to 30 degrees with respect to the tyre equator C. The breaker belt 7 is disposed over the entire width of the tread portion 5, and the edges thereof are extended to lie beneath the tread edges (e) in order to provide the tread rigidity.

The bandage belt 10 is to prevent the tread portion 5 from being lifted by centrifugal force during high speed running, and is made of organic fibre cords such as nylon cord or the like.

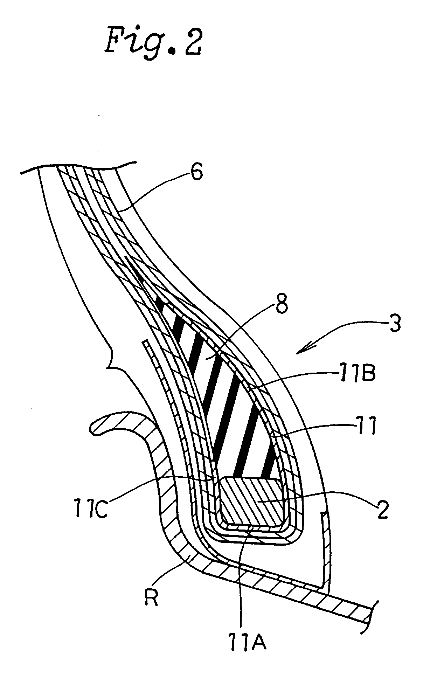

Each bead portion 3 is, as shown in Fig.2, provided with a bead apex 8 extending radially outwardly from the bead core 2, and a bead filler 11 covering the bead core 2 to reinforce the bead portion 3.

The bead apex 8 is made of hard rubber having a JIS A hardness of from 90 to 120 degrees extending taperingly radially outwardly from the bead core. The radially outer edge of the apex 8 is terminated at a radial position between the maximum tyre width position and the height of the radially outer end of a flange of a regular rim.

The bead filler 11 is composed of at least one ply of steel cords laid at an angle of from 20 to 60 degrees with respect to the circumferential direction of the tyre.

In this embodiment, the bead filler 11 has a main portion 11A along the bottom face of the bead core 2 and axially inner and outer turned up portions 11B and 11C extending from the axially inner and outer edges of the main portion in contact with side faces of the bead apex 8.

The radially outer edge of the axially outer turned up portion 11C is terminated radially inward of the radially outer end of the rim flange to avoid concentration of bending stress.

On the other hand, the radially outer edge of the inner turned up portion 11B is extended over the radially outer end of the rim flange, in this embodiment to the substantially same height as the bead apex 8.

Therefore, the rigidity of the bead portion is greatly increased in cooperation with the hard rubber bead apex which has a hardness of not less than 90 degrees but less than 120 degrees.

If the JIS A hardness of the bead apex 8 is more than 120 degrees, the bead rigidity is excessively increased which deteriorates the ride comfort.

If the cord angle of the bead filler 11 is less than 20 degrees, shaping of the bead filler or tyre building is difficult. If the cord angle is more than 60 degrees, the rigidity increasing effect is insufficient.

In this embodiment, the aspect ratio H/WT of the tyre is not more than 0.60, in this example 0.5. Incidentally, the aspect ratio is defined as the tyre section height H divided by the tyre width WT.

In such a low aspect tyre, by increasing the bead rigidity, the effect of an improvement in the pattern stiffness (described later) upon total tyre performance can be effectively increased. Thus, the effect of the present invention is further enhanced.

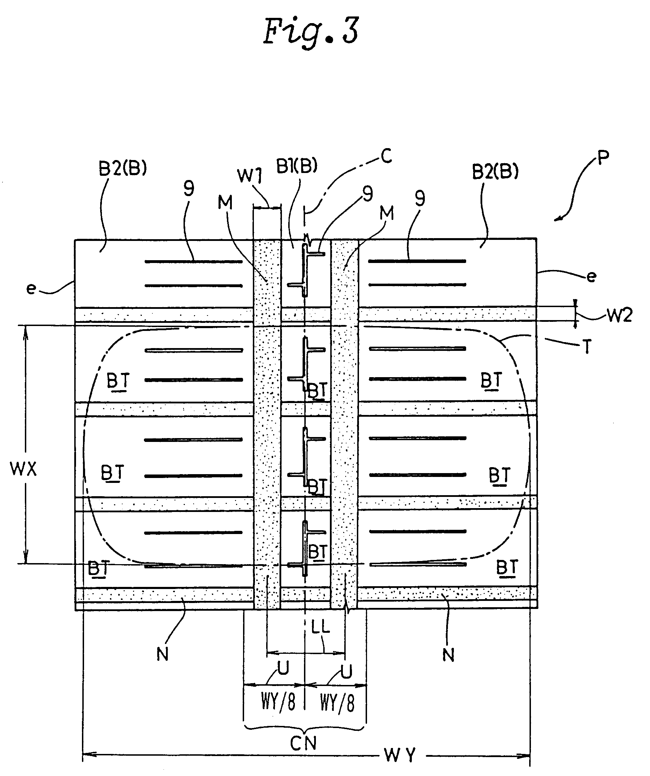

According to the present invention, the tread portion is provided with a block type pattern (see Figure 3) wherein the tread portion is provided with a pair of circumferential grooves extending continuously circumferentially of the tyre, disposed one on each side of the tyre equator, and axial grooves extending continuously from one tread edge to the other tread edge, crossing the circumferential grooves.

Accordingly, the block pattern P in this embodiment consists of a plurality of central blocks B1 between the circumferential grooves M, and a plurality of lateral blocks B2 between each of the circumferential grooves M and each tread edge (e). (Hereinafter, the central and lateral blocks B1 and B2 are generically called "block B".)

The depth D1 of the circumferential grooves M is not less than 8 mm and the groove width W1 is not less than 10 mm.

Preferably, the groove depth D1 is not more than 15 mm. If the depth is more than 15 mm, the pattern rigidity is excessively decreased, and as a result, the required cornering power can not be obtained.

Preferably, the groove width W1 of the grooves M is not more than 45 mm. If the width is more than 45 mm, the sea/land ratio of the tread pattern is excessively increased, and the grip performance is deteriorated.

The circumferential grooves M in this example are straight grooves having a constant width and a constant depth in the longitudinal direction.

The two circumferential grooves M disposed within a tread central region CN defined as the region centred on the tyre equator C having an axial width 1/4 times the ground contacting width WY.

Further, the axial distance of the axially outer edge of each circumferential groove M from the tyre equator C is smaller than 1/8 times the ground contacting width WY.

Furthermore, the axial distance LL between the circumferential grooves M measured between the groove centres is in the range of from 0.1 to 0.20 times the ground contacting width WY.

If the circumferential grooves M are formed outside the central region CN, the side force is decreased when cornering, and the cornering performance is decreased.

Here, the ground contacting width WY is the maximum axial width of the ground contacting part T when the tyre is mounted on its regular rim R and inflated to its regular inner pressure and loaded to its regular load.

The regular rim is the rim officially recommended for the tyre by TRA (USA), ETRTO (Europe), JATMA (Japan) and the like, and the regular inner pressure and the regular load are the maximum air pressure and the maximum tyre load for the tyre officially specified in the Air-pressure/Max.-load Tables of the same associations or organisations.

The axial grooves N in this embodiment are each straight grooves parallel to the tyre axial direction, that is, at an angle of 0 degrees to the axial direction. Accordingly, each block B has a rectangular shape as shown in Fig.3.

However, the axial grooves N can be inclined at a small angle α (alpha) of not more than 20 degrees but more than 0 degrees to the axial direction.

Further, the axial grooves can be formed in a curved configuration in which the tangential angle α (alpha) is not more than 20 degrees to the axial direction at any position.

The depth D2 of the axial grooves N is less than the above-mentioned groove depth D1, in this example about 6 mm.

The groove width W2 of the axial grooves N is less than the above-mentioned groove width W1, preferably 0.4 to 0.6 times the groove width W1.

If the groove depth D1 is less than 8 mm, or the groove width W1 is less than 10 mm, or the groove depth D1 is less than the groove depth D2, water clearance or drainage becomes insufficient, and aquaplaning resistance is greatly decreased.

By adjusting the groove widths W1 and W2, the land ratio of the block pattern P is set to be not less than 0.67.

Here, the land ratio is the ratio Sb/St of the total area Sb of the top surfaces of all the blocks B1 and B2 to the total area St of the tread face S.

More preferably, the land ratio Sb/St is not more than 0.80 in order to maintain a required wet grip performance.

Thereby, the actual ground contacting area is increased to decrease the ground pressure, that is, to increase the coefficient of friction to the road surface. As a result, side force, traction and braking force are maximised.

To increase the lateral stiffness of the tyre, the above-mentioned ground contacting width WY of the ground contacting part T is preferably not less than 1.4 times the ground contacting length WX which is the maximum circumferential length of the ground contacting part T.

However, to maintain the required traction performance, it is preferable to limit the ground contacting width WY to not more than about 2.0 times the ground contacting length WX.

According to the present invention, the pattern stiffness of the block pattern (P) in the tyre axial direction (hereinafter referred to as the axial pattern stiffness) is greatly increased in comparison with the pattern stiffness of the block pattern (P) in the tyre circumferential direction (hereinafter referred to as the circumferential pattern stiffness).

Here, the pattern stiffness in a given direction is defined as the total rigidity in the given direction of all the blocks BT which exist wholly or partially in the ground contacting part T.

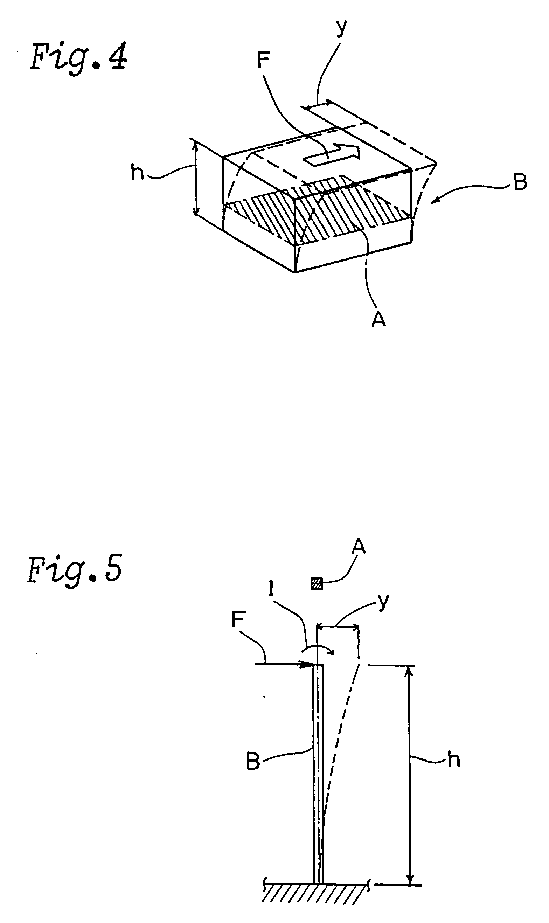

As shown in Fig.4, when an external force (F) from the road surface is applied to the top surface of a block (B) and the block (B) thus exhibits a displacement (y), the rigidity (K) of the block in the direction of the applied force (F) is given by F/y, that is,$\text{K = F / y.}$

Since the block (B) is fixed only at its base, if it is assumed as the cantilever as shown in Fig.5, we find that the displacement (y) equals the summation of a bending displacement (y1) and a shearing displacement (y2) caused by the external force (F), that is,$\text{y = y1 + y2.}$

Here, the displacements (y1) and (y2) are given by the following equations (1) and (2):$\begin{matrix}\begin{matrix}\begin{matrix}{\text{y1 = F h}}^{\text{3}} \text{/ 3 E I}\end{matrix} \\ \begin{matrix}\text{y2 = F h / G A}\end{matrix}\end{matrix}\end{matrix}$ where
F = External force
h = Block height
E = Elastic modulus of the block rubber
G = Shear modulus of the block rubber
I = Second moment of area of block surface
A = Block section area.

Accordingly, the block rigidity (K) in the direction of the force (F) can be written as$\text{K = F/y} \text{= F/(y1 + y2)} {\text{= 1/(h}}^{\text{3}} \text{/ 3 E I + h / A G ).}$

It can be seen from the equation (3) that the blocks rigidity (K) can be increased by increasing the second moment of area (I).

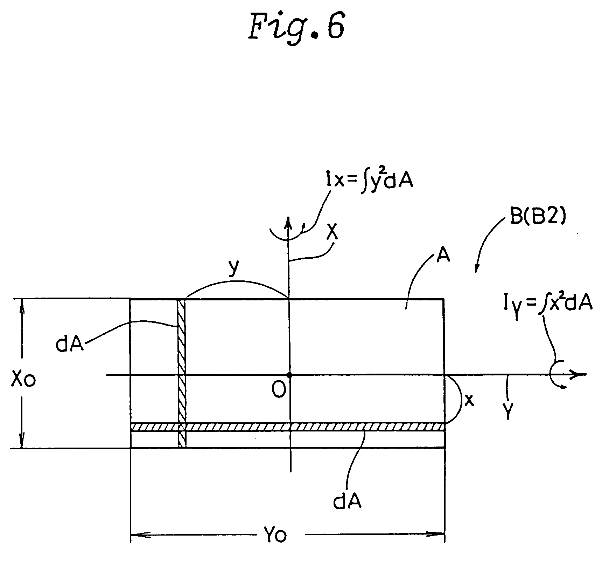

On the other hand, as shown in Fig.6, the second moment of area I_{X} about a circumferential line (X) passing through the centre (O) of the block at the top surface and the second moment of area I_{Y} about an axial line (Y) passing through the centre (O) are given by the following equations (4) and (5):$\begin{matrix}\begin{matrix}\begin{matrix}{\text{I}}_{\text{X}} {\text{= (integral)y}}^{\text{2}} \text{dA}\end{matrix} \\ \begin{matrix}{\text{I}}_{\text{Y}} {\text{= (integral)x}}^{\text{2}} \text{dA.}\end{matrix}\end{matrix}\end{matrix}$

The second moment of area I_{X} is concerned with the bending rigidity against an external axial force.

The second moment of area I_{Y} is concerned with the bending rigidity of the block against an external circumferential force.

According to the present invention, therefore, with respect to the blocks BT which exist wholly or partially in the ground contacting part T, the total (Σ(sigma)I_{X}) of the second moment of areas I_{X} of all the blocks BT is set to be larger than the total (Σ(sigma)I_{Y}) of the second moment of areas I_{Y} thereof, whereby, the pattern stiffness of the block pattern P is improved with respect to the balance between the axial direction and circumferential direction, and the total tyre performance can be improved.

On the other hand, in a rectangular block such as the block B of Fig.6, if the axial width is a constant value of Y0 and the circumferential length is a constant value of X0, then${\text{I}}_{\text{X}} {\text{= X0 Y0}}^{\text{3}} \text{/12,}$ and${\text{I}}_{\text{Y}} {\text{= Y0 X0}}^{\text{3}} \text{/12.}$

By those equations,${\text{I}}_{\text{X}} {\text{/ I}}_{\text{Y}} {\text{= Y0}}^{\text{2}} {\text{/ X0}}^{\text{2}} \text{.}$

Therefore, we find that the ratio of the axial bending rigidity to the circumferential bending rigidity is concerned with "Y0²/X0²".

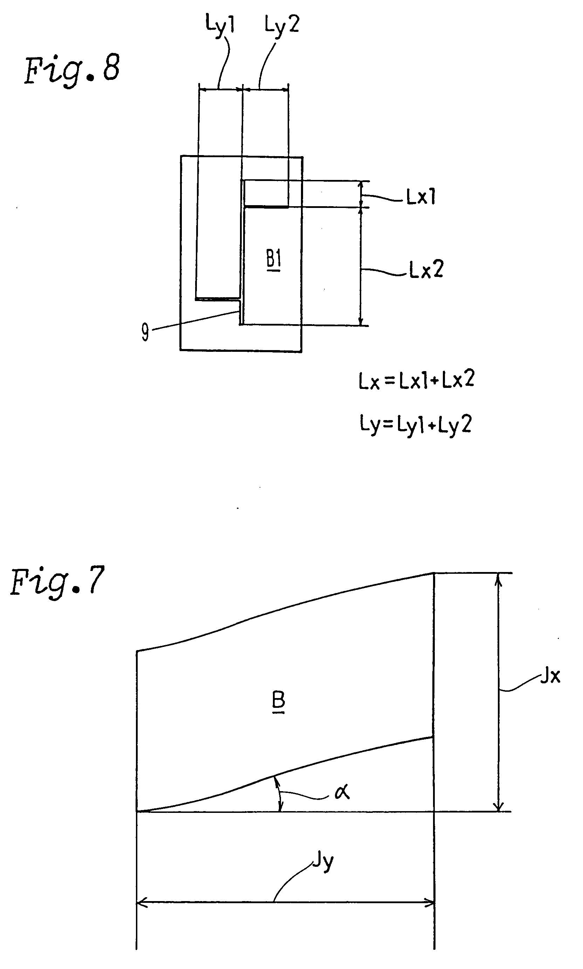

The inventors confirmed that this is true with respect to various block shapes similar to the rectangular shape, for example shown in Fig.7.

In this embodiment, therefore, with respect to the blocks BT which exist wholly or partially in the ground contacting part T, the total square width Σ(sigma)Jy² is in the range of from 2.5 to 50 times the total square length Σ(sigma)Jx², wherein the total square width Σ(sigma)Jy² is the total of the squares Jy² of all the blocks BT, Jy being the maximum axial width of each block at the top surface, and the total square length Σ(sigma)Jx² is the total of the square Jx² of all the blocks BT, Jx being the maximum circumferential length Jx of each block at the top surface.

When Σ(sigma)Jy² is 2.5 to 50 times Σ(sigma)Jx², the block pattern P is improved in pattern stiffness with respect to the balance between the axial and circumferential directions and the steering stability is improved.

When less than 2.5 times, the side force becomes small to generate less cornering power during cornering, and cornering becomes difficult.

On the contrary, when more than 50 times, the vehicle becomes liable to oversteer during cornering, and controllability is thus deteriorated.

Further, in this embodiment, each block BT is provided with a sipe 9 to improve the wet antiskid performance.

The sipe 9 is a cut or slot having no width or a very narrow width in comparison with the grooves M and N.

The depth of the sipe 9 is preferably in the range of from 0.5 to 0.7 times the depth D1 of the circumferential groove M, and less than the depth D2 of the axial grooves N.

The sipe in this embodiment is formed within the block, that is, all the ends are terminated within the block.

With respect to the sipes 9 provided in the blocks BT in the ground contacting part T, the total Σ(sigma)Lx of the lengths Lx of the circumferential components of all the sipes is set to be smaller than the total Σ(sigma)Ly of the lengths Ly of the axial components of all the sipes.

Fig.8 shows a sipe 9 formed in a block B1, wherein the circumferential component length $\text{Lx = Lx1 + Lx2}$, and the axial component length $\text{Ly = Ly1 + Ly2}$.

In the block B1, Lx > Ly, but in the block B2, Lx < Ly, and as a whole Σ(sigma)Lx < Σ(sigma)Ly.

Thereby, the axial stiffness is increased in comparison with the circumferential stiffness.

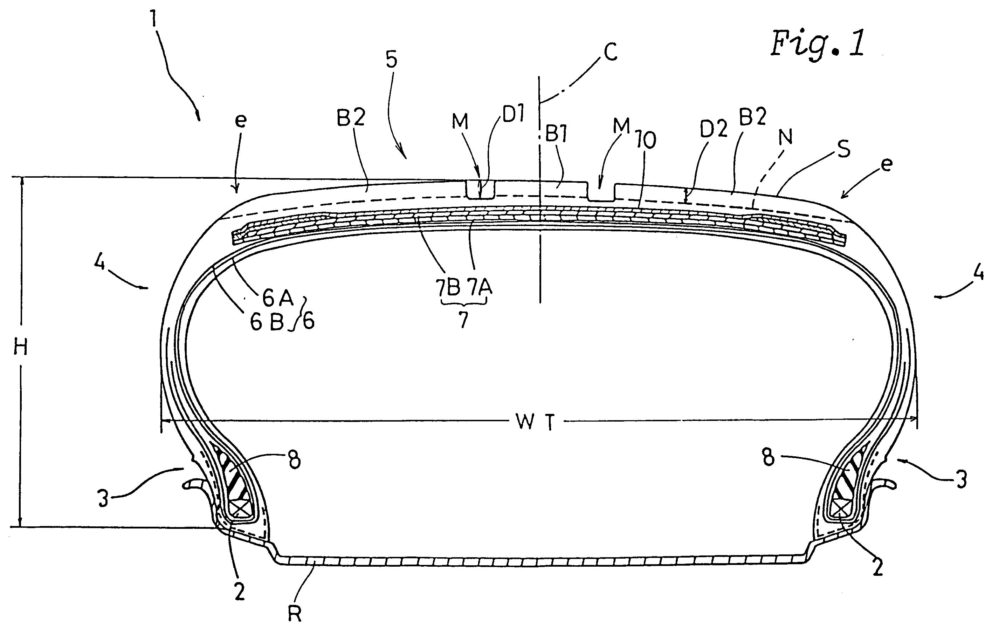

Test tyres of size 225/50ZR16 having the structure shown in Fig.1 were made, and were tested for response gain, linearity, rear grip, high speed stability and manoeuvrability, using a rear wheel drive sport car. The test results and the specifications of the test tyres are shown in Table 1.

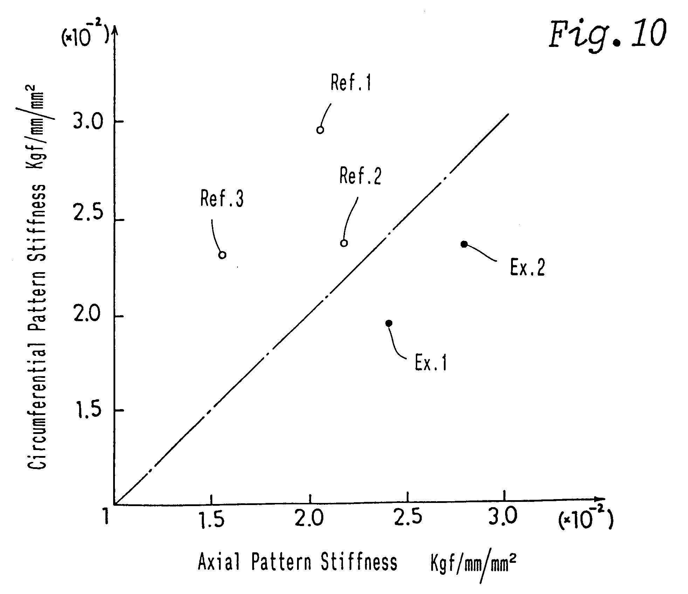

In the Example tyres 1 and 2 of the present invention, in which the Σ(sigma)I_{X} /Σ(sigma)I_{Y} ratio was more than 1 and the Σ(sigma)Jy² /Σ(sigma)Jx² ratio was in the range of 2.5 to 50, the axial pattern stiffness was greatly increased in comparison with the circumferential pattern stiffness as shown in Fig.10.

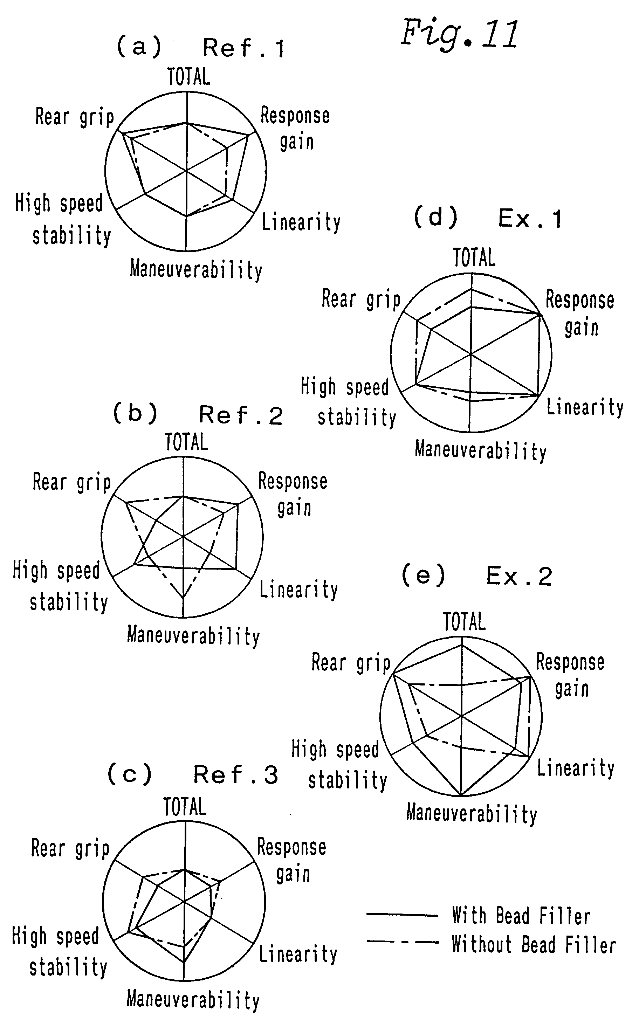

Further, the Example tyres 1 and 2 were greatly improved in total performance as shown in Fig.11(a)-(e).

Contrarily, in the reference tyres in which the circumferential pattern stiffness was larger than the axial pattern stiffness, the overall performance, in particular the linearity of the side force, was not good.

Furthermore, it was found that by providing the bead filler 11, the tyres of the present invention could be further effectively improved in the total performance. That is, by increasing the bead rigidity, the effect of the tread pattern rigidity on improving the total tyre performance was enhanced.

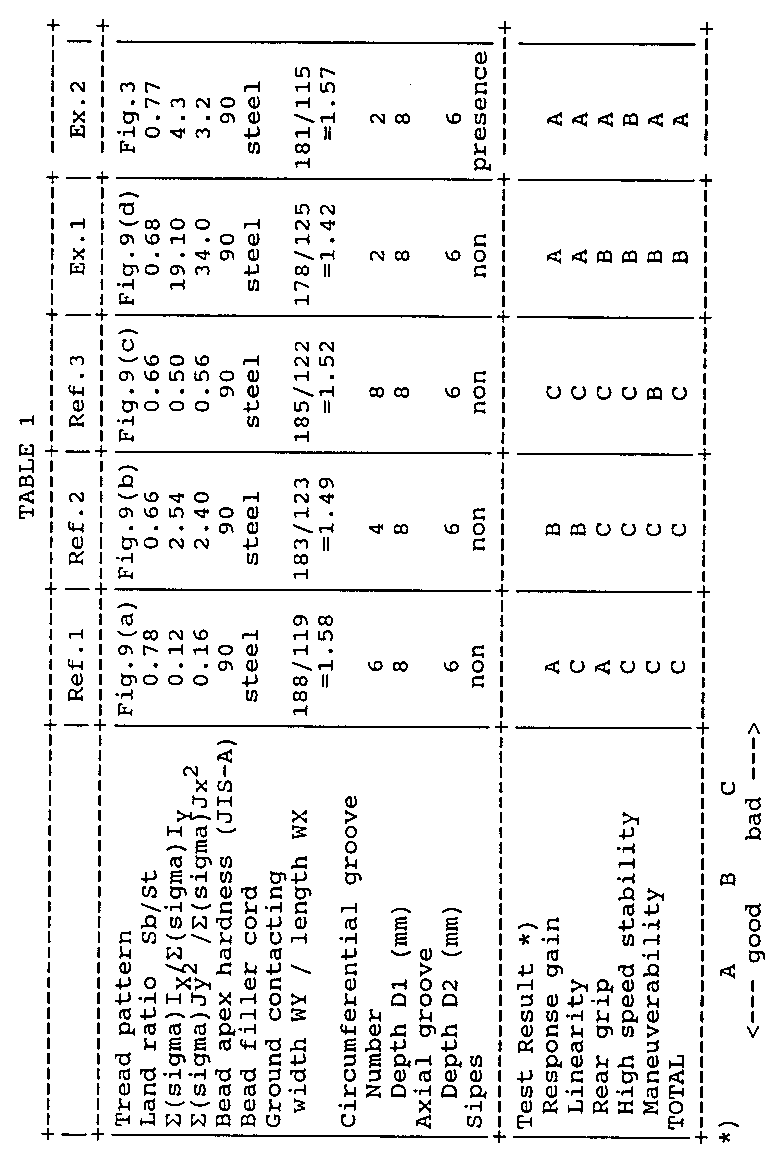

## Claims

1. A radial tyre comprising a tread portion (5), a pair of bead portions (3) each with a bead core (2) therein, a pair of sidewall portions (4) extending therebetween, a radial carcass (6) extended between the bead portions (3) and turned up around the bead cores (2), and a belt (7) disposed radially outside the carcass (6), said tread portion (5) provided with a block pattern (P) consisting of blocks (B1,B2) defined by at least one circumferential groove (M) and a plurality of axial grooves (N), characterised in that the tread portion (5) is provided with only two circumferential grooves (M) each disposed one on each side of the tyre equator, said two circumferential grooves (M) being located in a tread central region (CN), said tread central region (CN) being centred on the tyre equator and having an axial width of 1/4 times the maximum axial width (WY) of the ground contacting part, said block pattern (P) having a land ratio of not less than 0.67, said land ratio being defined as the total (Sb) of the top surface areas of all said blocks (B1,B2) divided by the total area (St) of the tread face, said blocks including blocks BT which exist wholly or partially in the ground contacting part of the tread (5), with respect to said blocks BT, the total ΣI_{X} of second moment of areas I_{X} of all said blocks BT being larger than the total ΣI_{Y} of the second moment of areas I_{Y} of all said blocks BT, wherein each said second moment of area I_{X} is that of the shape of the top surface of each block BT about a circumferential line (X) passing through the centre point (O) on the top, ground contacting surface, and each said second moment of area I_{Y} is that of the shape the top, ground contacting surface about an axial line (Y) passing through the centre point (O), with respect to said blocks BT, the total square width ΣJy² is in the range of from 2.5 to 50 times the total square length ΣJx², where said total square width ΣJy² is of the sum of the squares Jy² of all said blocks BT, Jy being the maximum axial width of the top surface of each block BT, and said total square length ΣJx² is of the sum of the squares Jx² of all said blocks BT, Jx being the maximum circumferential length Jx of the top surface of each block BT, each of said blocks BT in the ground contacting part being provided with a sipe (9), and the sipes in said blocks BT in the tread central region (CN) have a circumferential component and an axial component, and the total ΣLx of the lengths Lx of the circumferential components of all said sipes (9) is smaller than the total ΣLy of the lengths Ly of the axial components thereof, the depth of the circumferential grooves (M) is larger than the depth of the axial grooves (N), the maximum axial width of the ground contacting part is not less than 1.4 times the maximum circumferential length thereof, the width of said circumferential grooves (M) being not less than 10 mm, and the depth thereof not less than 8 mm, and the groove centres of two circumferential grooves (M) are spaced apart from each other by a distance of from 0.10 to 0.20 times the maximum axial width (WY) of the ground contacting part when measured axially.

2. A radial tyre accoding to claim 1, characterised in that each of said circumferential grooves (M) is a straight groove having a constant width and a constant depth in the longitudinal direction thereof.

3. A radial tyre according to claim 2, characterised in that each of the axial grooves (N) is a straight groove extending parallel to the axial direction of the tyre, whereby said blocks have a rectangular shape.

4. A radial tyre according to any of claims 1 to 3, characterised in that all the ends of the sipes (9) are terminated within said blocks.

## Patentansprüche

1. Ein Radialreifen mit einem Laufflächenteil (5), einem Paar Wulstteile (3), jeweils mit einem Wulstkern (2) darin, einem Paar Seitenwandteile (4), die sich dazwischen erstrecken, einer radialen Karkasse (6), die zwischen den Wulstteilen (3) ausgedehnt und um die Wulstkerne (2) herum nach oben gebogen ist, und einem Gürtel (7), der radial außerhalb der Karkasse (6) angeordnet ist, wobei der Laufflächenteil (5) mit einem Blockprofil (P) versehen ist, das aus Blöcken (B1, B2) besteht, die durch zumindest eine Umfangsrille (M) und mehrere Axialrillen (N) definiert sind, dadurch gekennzeichnet, daß der Laufflächenteil (5) mit nur zwei Umfangsrillen (M) versehen ist, die jeweils einzeln auf jeder Seite des Reifenäquators angeordnet sind, wobei sich die beiden Umfangsrillen (M) in einem Mittelbereich (CN) der Lauffläche befinden, welcher Mittelbereich (CN) der Lauffläche auf dem Reifenäquator zentriert ist und eine axiale Breite des 1/4-fachen der maximalen axialen Breite (WY) des Bodenkontaktteils hat, das Blockprofil (P) ein Aufstandsverhältnis von nicht weniger als 0,67 aufweist, wobei das Aufstandsverhältnis als die Summe (Sb) der Flächen der Oberseiten aller Blöcke (B1, B2), geteilt durch die Gesamtfläche (St) der Lauffläche, definiert ist, wobei die Blöcke Blöcke BT umfassen, die ganz oder teilweise in dem Bodenkontaktteil der Lauffläche (5) vorhanden sind, bezüglich der Blöcke BT die Summe ΣI_{X} eines zweiten Moments von Flächen I_{X} aller Blöcke BT größer als die Summe ΣI_{Y} des zweiten Moments von Flächen I_{Y} aller Blöcke BT ist, worin jedes zweite Moment einer Fläche I_{X} das der Form der Oberseite jedes Blocks BT um eine Umfangslinie (X) ist, die durch den Mittelpunkt (O) auf der oberen Bodenkontaktfläche verläuft, und jedes zweite Moment einer Fläche I_{Y} das der Form der oberen Bodenkontaktfläche um eine axiale Linie (Y) ist, die durch den Mittelpunkt (O) verläuft, bezüglich der Blöcke BT die gesamte quadratische Breite ΣJy² in dem Bereich vom 2,5- bis 50-fachen der gesamten quadratischen Länge ΣJx² liegt, worin die gesamte quadratische Breite ΣJy² aus der Summe der Quadrate Jy² aller Blöcke BT besteht, wobei Jy die maximale axiale Breite der Oberseite jedes Blocks BT ist, und die gesamte quadratische Länge ΣJx² aus der Summe der Quadrate Jx² aller Blöcke BT besteht, wobei Jx die maximale Umfangslänge Jx der Oberseite jedes Blocks BT ist, wobei jeder der Blöcke BT in dem Bodenkontaktteil mit einer Lamelle (9) versehen ist, und die Lamellen in den Blöcken BT in dem Mittelbereich (CN) der Lauffläche eine Umfangskomponente und eine axiale Komponente aufweisen, und die Summe ΣLx der Längen Lx der Umfangskomponenten aller Lamellen (9) kleiner als die Summe ΣLy der Längen Ly von deren axialen Komponenten ist, die Tiefe der Umfangsrillen (M) größer als die Tiefe der Axialrillen (N) ist, die maximale axiale Breite des Bodenkontaktteils nicht geringer als das 1,4-fache ihrer maximalen Umfangslänge ist, wobei die Breite der Umfangsrillen (M) nicht geringer als 10 mm und deren Tiefe nicht geringer als 8 mm ist, und die Rillenmitten zweier Umfangsrillen (M) in einem Abstand vom 0,10- bis 0,20-fachen der maximalen axialen Breite (WY) des Bodenkontaktteils voneinander beabstandet sind, wenn man in axialer Richtung mißt.

2. Ein Radialreifen nach Anspruch 1, dadurch gekennzeichnet, daß jede der Umfangsrillen (M) eine gerade Rille mit einer konstanten Breite und einer konstanten Tiefe in ihrer Längsrichtung ist.

3. Ein Radialreifen nach Anspruch 2, dadurch gekennzeichnet, daß jede der Axialrillen (N) eine gerade Rille ist, die sich parallel zur axialen Richtung des Reifens erstreckt, wodurch die Blöcke eine rechtwinklige Form haben.

4. Ein Radialreifen nach einem der Ansprüche 1 bis 3, dadurch gekennzeichnet, daß alle Enden der Lamellen (9) innerhalb der Blöcke enden.

## Revendications

1. Pneumatique à carcasse radiale, comprenant une partie de bande de roulement (5), une paire de parties (3) de talon ayant chacune une tringle (2), une paire de parties de flanc (4) placées entre les parties précédentes, une carcasse radiale (6) placée entre les parties de talon (3) et repliée autour des tringles (2), et une ceinture (7) placée radialement à l'extérieur de la carcasse (6), la partie de bande de roulement (5) ayant un dessin de blocs (P) constitué de blocs (B1, B2) délimités par au moins une gorge circonférentielle (M) et plusieurs gorges axiales (N), caractérisé en ce que la partie (5) de bande de roulement n'a que deux gorges circonférentielles (M) disposées chacune d'un côté de l'équateur du pneumatique, les deux gorges circonférentielles (M) étant disposées dans une région centrale (CN) de la bande de roulement, la région centrale (CN) de la bande de roulement étant centrée sur l'équateur du pneumatique et ayant une largeur axiale égale au quart de la largeur axiale maximale (WY) de la partie de contact avec le sol, la sculpture (P) à blocs ayant un rapport de portée qui n'est pas inférieur à 0,67, le rapport de portée étant défini comme étant la somme (Sb) des surfaces supérieures de tous les blocs (B1, B2) divisée par la surface totale (St) de la face de la bande de roulement, les blocs comprenant des blocs BT qui sont disposés totalement ou partiellement dans la partie de contact avec le sol de la bande de roulement (5) par rapport aux blocs BT, la somme ΣI_{X} des moments d'inertie des surfaces I_{X} de tous les blocs BT étant supérieure à la somme ΣI_{Y} des moments d'inertie des surfaces I_{Y} de tous les blocs BT, chaque moment d'inertie de surface I_{X} étant celui de la configuration de la surface supérieure de chaque bloc BT autour d'une droite circonférentielle (X) passant par le centre (O) à la surface supérieure de contact avec le sol, et chaque moment d'inertie de surface I_{Y} étant celui de la configuration de la surface supérieure de contact avec le sol autour d'une droite axiale (Y) passant par le centre (O), pour les blocs BT, la somme des carrés des largeurs ΣJy² est comprise entre 2,5 et 50 fois la somme des longueurs au carré ΣJx², la somme des largeurs au carré ΣJy² étant la somme des carrés Jy² de tous les blocs BT, Jy étant la largeur axiale maximale de la surface supérieure de chaque bloc BT, et la somme des longueurs au carré ΣJx² étant la somme des carrés Jx² de tous les blocs BT, Jx étant la longueur circonférentielle maximale Jx de la surface supérieure de chaque bloc BT, chacun des blocs BT de la partie de contact avec le sol ayant une fente (9), les fentes des blocs BT de la région centrale (CN) de la bande de roulement ayant une composante circonférentielle et une composante axiale, et la somme ΣLx des longueurs Lx des composantes circonférentielles de toutes les fentes (9) est inférieure a la somme ΣLy des longueurs Ly de leurs composantes axiales, la profondeur des gorges circonférentielles (M) est supérieure à la profondeur des gorges axiales (N), la largeur axiale maximale de la partie de contact avec le sol n'est pas inférieure à 1,4 fois la longueur circonférentielle maximale de cette partie, la largeur des gorges circonférentielles (M) n'étant pas inférieure à 10 mm et sa profondeur n'étant pas inférieure à 8 mm, et les centres des deux gorges circonférentielles (M) sont séparés l'un de l'autre par une distance comprise entre 0,10 et 0,20 fois la largeur axiale maximale (WY) de la partie de contact avec le sol lorsqu'elle est mesurée axialement.

2. Pneumatique à carcasse radiale selon la revendication 1, caractérisé en ce que chacune des gorges circonférentielles (M) est une gorge rectiligne ayant une largeur constante et une profondeur constante dans la direction longitudinale.

3. Pneumatique à carcasse radiale selon la revendication 2, caractérisé en ce que chacune des gorges axiales (N) est une gorge rectiligne qui est parallèle à la direction axiale du pneumatique, si bien que les blocs ont une configuration rectangulaire.

4. Pneumatique à carcasse radiale selon l'une quelconque des revendications 1 à 3, caractérisé en ce que toutes les extrémités des fentes (9) se terminent à l'intérieur des blocs.
